# EUROPEAN PATENT SPECIFICATION

(11) **EP 1 733 463 B1**
(45) Date of publication and mention of the grant of the patent: **16.12.2009**
(21) Application number: 05718359.2
(22) Date of filing: 06.04.2005
(51) Int. Cl.: H02G 3/32, B25C 7/00

(54) **ADAPTOR FOR A TOOL**
ADAPTER FÜR EIN WERKZEUG
ADAPTATEUR POUR OUTIL

(30) Priority: 06.04.2004 AU 2004901855; 24.05.2004 AU 2004902763
(43) Date of publication of application: 20.12.2006
(73) Proprietor: Cetram Pty Limited, Oakleigh, Victoria 3166 (AU)
(72) Inventor: GAMBLE, Tim, Viewbank, Victoria 3084 (AU); CRAWFORD, Andrew, Victoria 3029 (AU); BLOCHLINGER, Fred, Toorak, Victoria 3142 (AU)
(74) Representative: Finnie, Peter John
(86) International application number: PCT/IB2005/000888
(87) International publication number: WO 2005/099060

(56) References cited:
- US-A- 3 998 372
- US-A- 4 684 050
- US-A- 5 484 094

## Description

### Field of the Invention

This invention relates to an adaptor for a tool and more particularly, but not exclusively, to an adaptor for a fastening tool to facilitate attachment of a bracket or other item to a substrate.

### Background of the Invention

It has been previously proposed to house electrical wires within a conduit in the form of a plastic tube or piping for running the wires between locations. For example, electrical wires conducting mains electricity may be run along the outside wall of a building between power points and/or fixed electrical fittings in this way. The wires are commonly sheathed within PVC piping or some other form of conduit to protect and insulate the wires. The conduit is commonly mounted to a substrate by mounting brackets fastened to the substrate at spaced intervals. Mounting brackets used for this purpose typically have a holding portion and a mounting portion integrally attached to the holding portion. The holding portion is shaped such that, in use, the holding portion extends around the conduit so as to hold the conduit in place between the mounting bracket and the substrate. The mounting portion is provided with an aperture through which a fastener can be inserted so as to fasten the mounting bracket to the substrate. The fastener may be in the form of, for example, a nail, bolt or screw. When the fastener is in the form of a screw, an anchor (for example a plastic anchor) may be used to assist in retaining the screw within the wall, particularly in the case where the wall is of a material (such as brick, concrete or plaster) susceptible to failure when an axial load is applied to the screw.

Typically, mounting brackets of the above type are installed by manually supporting the mounting bracket over the conduit with the holding portion of the mounting bracket extending around an outside surface of the conduit so as to locate the conduit and mounting bracket in position ready for fastening. The fastener is then inserted through the aperture of the mounting bracket and into the substrate behind the mounting bracket, thus fastening the mounting bracket to the substrate. It is dangerous to use a powered fastening tool, such as a gas-actuated or powder-actuated fastening tool, to fasten mounting brackets in this way as, with the mounting bracket being supported manually in position during driving of the fastener through the mounting bracket, there exists a risk of accidentally driving a fastener through the hand used to support the mounting bracket in place. It is safer to manually insert a fastener through the aperture in the mounting bracket such as by manually driving a screw through the aperture and into the substrate of the wall using a screwdriver, however such manual insertion of fasteners is slow. Moreover, the fastening of mounting brackets in this way commonly requires two people, a first person to hold the mounting bracket and conduit in place and a second person to insert the fastener, making the process time-consuming and labour-intensive.

Examples of the present invention seek to overcome or at least alleviate one or more disadvantages of conventional methods of fastening wires housed in a conduit to a substrate.

US 3,998,372 and US 4,684,050 each disclose an adaptor of the type set out in the preamble of the accompanying claim 1.

### Summary of the Invention

In accordance with an aspect of the present invention, there is provided an adaptor for a fastening tool, the adapter having an attachment portion for coupling the adaptor to the fastening tool, and a support for coupling a mounting bracket to the adaptor arranged so as to hold the mounting bracket relative to a substrate and allow a fastener from the tool to be driven through the mounting bracket to secure the mounting bracket to the substrate, wherein the adaptor has a body which includes the attachment portion,
characterised in that there are two said supports which extend outwardly from opposite sides of the body, each of the supports being in the form of a curved arm having a different radius of curvature to enable contact between one of the arms and associated differently shaped mounting brackets.

Preferably, the attachment portion is fitted to a nosepiece of the tool. More preferably, the attachment portion includes an aperture which receives the nosepiece of the tool. More preferably, the adaptor is provided with a lock for releasably locking the adaptor to the nosepiece of the tool. Preferably, the lock is selectively operable to engage with an annular groove formed in an outer surface of the nosepiece. Preferably, the lock is included in the body.

Preferably, the adaptor is arranged to align an aperture of the mounting bracket with a nosepiece bore of the tool.

Preferably, each support has a magnetic member for magnetic attraction with the mounting bracket so that the mounting bracket is able to be carried by the adaptor.

Preferably, the mounting bracket is for securing a conduit housing wires to a substrate.

There is further disclosed an adaptor for a tool having an attachment portion for coupling to the tool, and a magnetic holder for holding a work piece with which the tool is arranged to operate.

Preferably, the adaptor is arranged to assist positioning of the work piece relative to the tool.

Preferably, the attachment portion includes a structure to engage with a nosepiece of the tool. Preferably, the structure has an aperture which receives the nosepiece of the tool. More preferably, the adaptor is provided with a lock for releasably locking the adaptor to the nosepiece of the tool. Preferably, the lock is selectively operable to engage with an annular groove formed in an outer surface of the nosepiece.

There is yet further disclosed a method of securing a mounting bracket to a substrate including the steps of:
coupling the mounting bracket to an adaptor which is arranged so as to hold the mounting bracket relative to a fastening tool;
supporting the mounting bracket in position relative to the substrate; and
operating the tool to drive a fastener through a mounting portion of the mounting bracket to secure the mounting bracket to the substrate.

Preferably, the method includes the step of coupling the adaptor to the fastening tool prior to the step of supporting the mounting bracket in position relative to the substrate.

Preferably, the method includes the step of uncoupling the adaptor from the secured mounting bracket.

Preferably, where the mounting bracket has two mounting portions, one at either side of a holding portion, after the step of operating the tool to drive a fastener through a mounting portion of the mounting bracket to secure the mounting bracket to the substrate, the method further includes the steps of:
pivoting the adaptor about substantially 180 degrees relative to the mounting bracket so as to align the tool for driving a second fastener through the other mounting portion of the mounting bracket; and
operating the tool to drive the second fastener through the other mounting portion to further secure the mounting bracket to the substrate.

### Brief Description of the Drawings

The invention will now be described, by way of non-limiting example only, with reference to the accompanying drawings, in which:
Figure 1 is a bottom perspective view of an adaptor for a fastening tool;
Figure 2 is a perspective view of a first side of the adaptor shown in Figure 1, together with various mounting brackets shown secured to a piece of wood;
Figure 3 is a side view of a second side of the adaptor shown in Figures 1 and 2, the adaptor shown as being coupled to a half-saddle type mounting bracket;
Figure 4 is an end perspective view of the adaptor shown in Figures 1 to 3, the adaptor shown as being coupled to a full-saddle type mounting bracket;
Figure 5 is a top view of the adaptor shown in Figures 1 to 4, the adaptor shown as being coupled to a half-saddle type mounting bracket;
Figure 6 is a bottom view of the adaptor shown in Figures 1 to 5, a lock of the adaptor being shown in a disengaged condition;
Figure 7 is a bottom view of the adaptor shown in Figures 1 to 6, the lock of the adaptor being shown in an engaged condition;
Figure 8 is perspective view of the adaptor shown in Figures 1 to 7, the adaptor shown as being coupled to a fastening tool;
Figure 9 is a bottom perspective view of an alternative adaptor for a fastening tool;
Figure 10 is a side view of a side of the adaptor shown in Figure 9;
Figure 11 is a bottom view of the adaptor shown in Figures 9 and 10;
Figure 12 is a top view of the adaptor shown in Figures 9 to 11;
Figure 13 is a side perspective view of the adaptor shown in Figures 9 to 12; and
Figure 14 is a top/end perspective view of the adaptor shown in Figures 9 to 13.

### Detailed Description

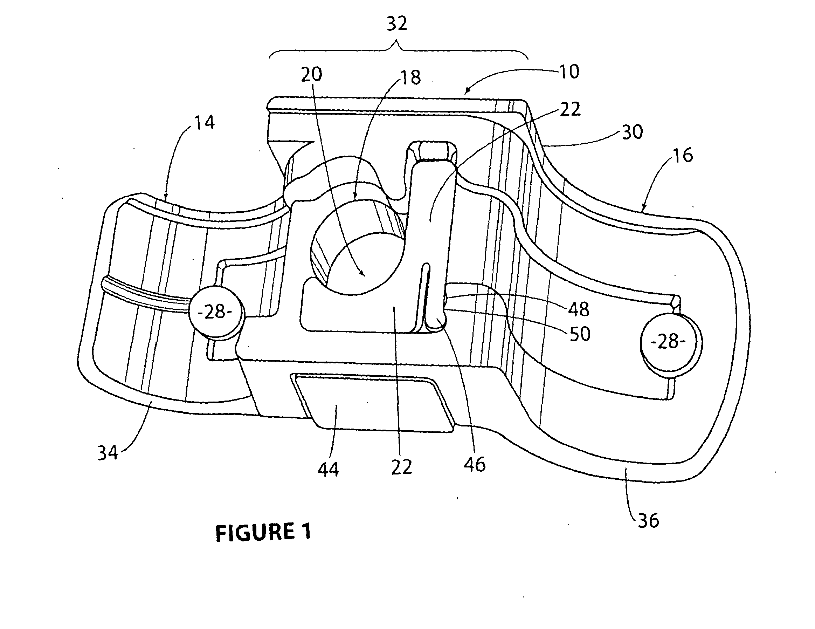

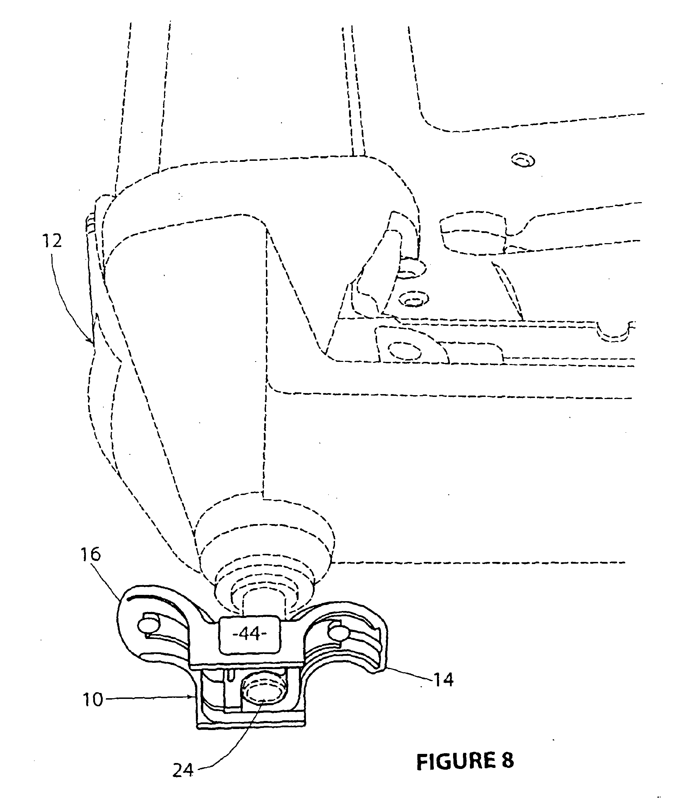

An adaptor 10 for a tool 12 having an attachment portion 18 for coupling to the tool 12 is shown in Figure 1. The attachment portion 18 includes a structure having an aperture 20 which receives a nosepiece 24 of the tool 12. In the particular example of the adaptor 10 shown in the drawings, the aperture 20 is for receiving a nosepiece of a fastening tool 12, as shown in Figure 8. When the nosepiece 24 is received within the aperture 20 as shown in Figure 8, fasteners pass through the aperture 20 when they are driven through the nosepiece 24.

The adaptor 10 is able to be engaged in place on the nosepiece 24 of the fastening tool 12 by virtue of the adaptor 10 having a selectively operable lock 22. The lock 22 cooperates with a groove in the nosepiece 24 to positively locate the adaptor 10 in place on the nosepiece 24.

In the example shown, the adaptor 10 is configured to carry an article in the form of a work piece, and more particularly a mounting bracket 26 with which the fastening tool 12 is arranged to operate.

The adaptor 10 shown also includes a first support 14 on one side of the attachment portion 18, and a second, larger, support 16 on the opposite side of the attachment portion 18. By being arranged in this way, the adaptor 10 is able to assist in positioning of a mounting bracket 26 relative to the tool 12. Each of the supports 14, 16 is provided with a magnetic member 28 for attracting a mounting bracket 26 so that the mounting bracket 26 is able to be carried by the adaptor 10. Such attraction of the mounting bracket 26 to the adaptor 10 serves to retain the mounting bracket 26 in place on the adaptor so that the mounting bracket 26 is able to be carried and located in place by manipulation of the adaptor 10 itself, or by manipulation of the fastening tool 12 to which the adaptor 10 is coupled.

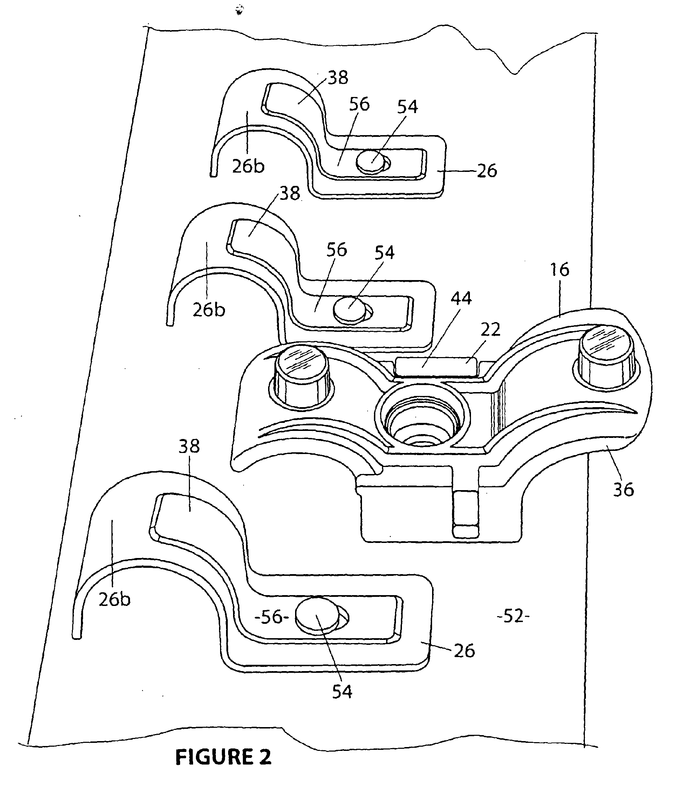

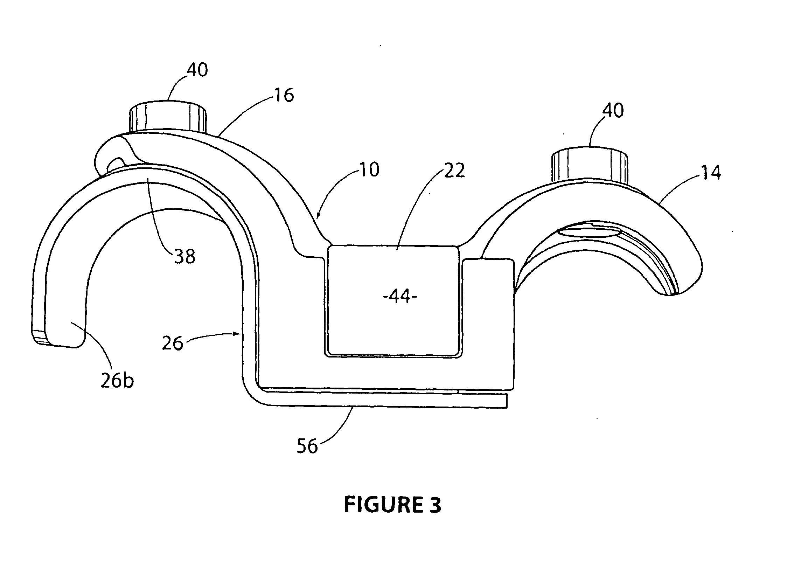

More particularly, the adaptor 10 has a body 32 including the attachment portion 18 and the lock 22, and the pair of supports 14, 16 which extend outwardly from opposite ends of the body 32. Each of the supports 14, 16 is in the form of a curved arm 34, 36, each of the two arms having a different radius of curvature to enable contact between the arm 34, 36 and curved holding portions 38 of different mounting brackets 26. In the adaptor 10 shown in the representations, the first support 14 has a radius of curvature suitable such that the first support 14 is able to contact the curved holding portion 38 of a 20mm diameter saddle type mounting bracket 26a (see Figure 2), and the second support 16 has a radius of curvature to enable contact between the second support 16 and the curved holding portion 38 of a 25mm diameter saddle type mounting bracket 26b (see Figure 2 and Figure 3). As such, a single adaptor 10 is provided which can be used with two common sizes of mounting bracket 26.

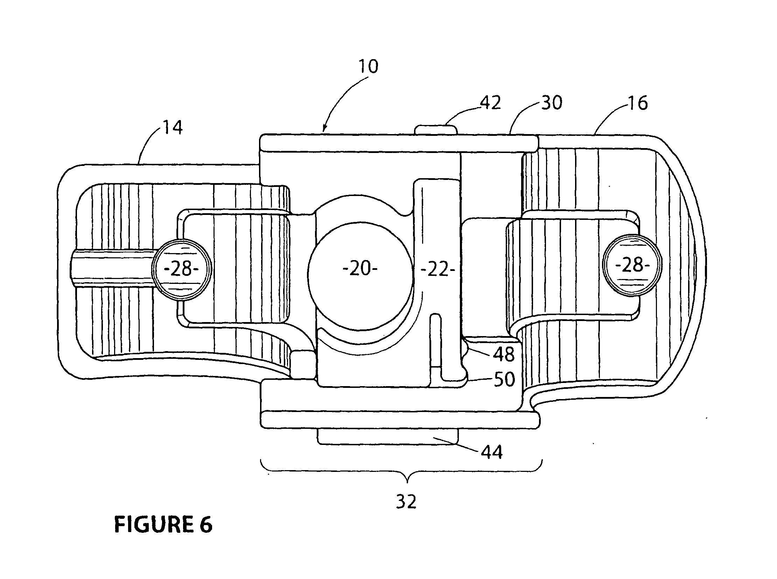

Figure 2 shows a side perspective view of a first side of the adaptor 10 of Figure 1, and clearly shows the second support 16 as having a greater radius of curvature than the first support 14. This photograph also shows bulges 40 on the top surfaces of the supports 14, 16 which bulges house the magnetic members 28. In this Figure the lock 22 is in an engaged condition, as evident by the protrusion of button 42 from the body 32. Button 42 is pushed inwardly to move the lock 22 to its disengaged condition, which condition is evident by the protrusion from the body 32 of opposite button 44 (see Figure 6). Positive engagement of the lock 22 in engaged and disengaged conditions is achieved by virtue of the sprung point 46 (see Figures 1, 6 and 7) and the corresponding two indentations 48, 50 in the body 32 which receive the sprung point 46, and correspond to the engaged condition and disengaged condition, respectively.

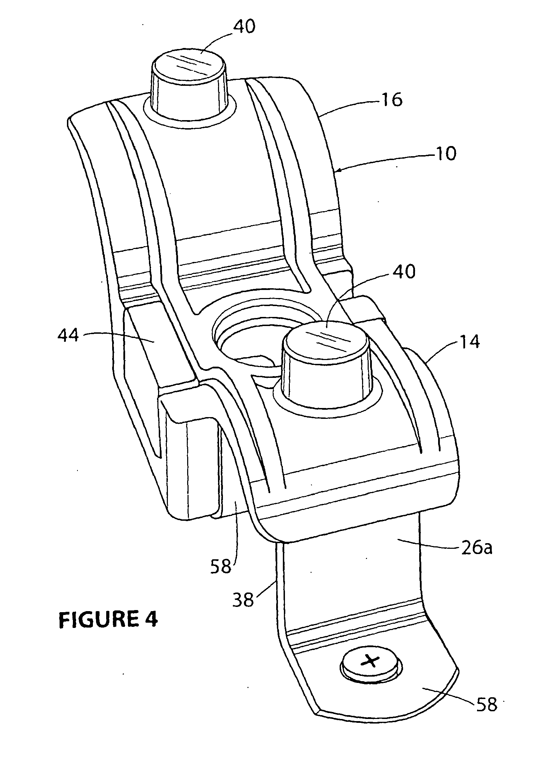

Also shown in Figure 2 are several mounting brackets 26, 26a, 26b shown as being secured to a substrate in the form of a piece of wood 52 by fasteners 54. The mounting brackets 26, 26a, 26b are all either of the "half-saddle" type, wherein the mounting bracket comprises a curved holding portion 38 with an integrally formed substantially planar mounting portion 56 at only one side of the holding portion 38, or are of the "full-saddle" type (see Figure 4) which comprises a curved holding portion 38 with a substantially planar mounting portion 58 at either side of the holding portion 38.

The curved holding portions 38 of the mounting brackets 26, 26a, 26b shown in the representations are for holding conduits housing one or more wires relative to a substrate. More particularly, the one or more wires are contained in a conduit and the curved holding portion 38 of the mounting bracket 26 is shaped to correspond with the shape of an outside surface of the conduit so that, when the mounting bracket 26 is fastened to the substrate, the curved holding portion 38 extends at least partially around the outside surface of the conduit to hold the conduit to the substrate. In one particular form, the conduit is in the form of cylindrical PVC piping and the curved holding portion 38 of the mounting bracket 26 is correspondingly curved to contact with the outside surface of the PVC piping. In turn, as shown in Figure 3 which depicts the adaptor 10 when coupled to a mounting bracket of the "half-saddle" type, the profile of the second support 16 closely corresponds to the profile of the curved holding portion 38.

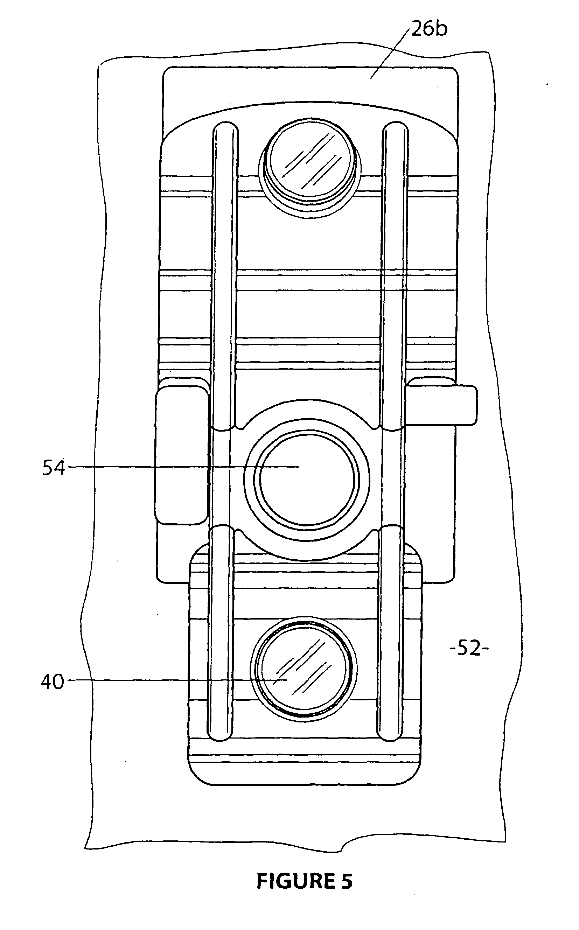

Although mounting brackets of the types shown commonly have a pre-formed aperture in the mounting portion 56, 58, it is also possible for there to be no pre-formed aperture and instead for the aperture to be formed in the mounting portion by the fastener as it is driven through the mounting bracket and into the substrate. As seen from the top view of Figure 5, when the 25mm mounting bracket 26b is coupled to the adaptor 10, by virtue of the relative placement of the second support 16 and the aperture 20, the aperture 20 is aligned with the location on the mounting portion at which the fastener is to be driven through the mounting bracket and into the substrate, whether that be at the pre-formed aperture or at the location at which the aperture is to be formed by the fastener 54. In the case of Figure 5, the fastener 54 has already been driven through the mounting bracket 26b and into the piece of wood 52. Similarly, when a 20mm mounting bracket 26a is coupled to the adaptor 10, by virtue of the relative placement of the first support 14 and the aperture 20, the aperture 20 is aligned with the location on the mounting portion at which the fastener is to be driven through the mounting bracket 26a.

The mounting bracket 26 is secured to the substrate 52 by coupling the adaptor 10 to the fastening tool 12 as shown in Figure 8. Although the adaptor 10 depicted is removably coupled to the fastening tool 12, it is foreseen that an alternative adaptor may be integrally formed on the nosepiece of the fastening tool. Returning to the arrangement shown in Figure 8, the adaptor 10 is fitted to the nosepiece 24 of the tool 12 by inserting the nosepiece 24 through the aperture 20 of the adaptor 10 with the lock 22 in its disengaged condition, and by operating the lock 22 by way of button 44 so as to engage the lock 22 with an annular groove formed around the periphery of the nosepiece 24. The mounting bracket 26 is then coupled to adaptor 10 with the curved portion 38 of the mounting bracket 26 in contact with the appropriate one of the supports 14, 16, and with the mounting portion 56, 58 of the mounting bracket 26 under the body 32 of the adaptor 10. If necessary, the tool 12 is then moved so that the mounting bracket 26 is supported in position relative to the substrate 52, with the holding portion 38 of the mounting bracket 26 extending about a conduit to be secured to the substrate, and the tool 12 is operated so as to drive a fastener through the mounting portion 56,58 of the mounting bracket 26 to secure the mounting bracket 26 to the substrate 52.

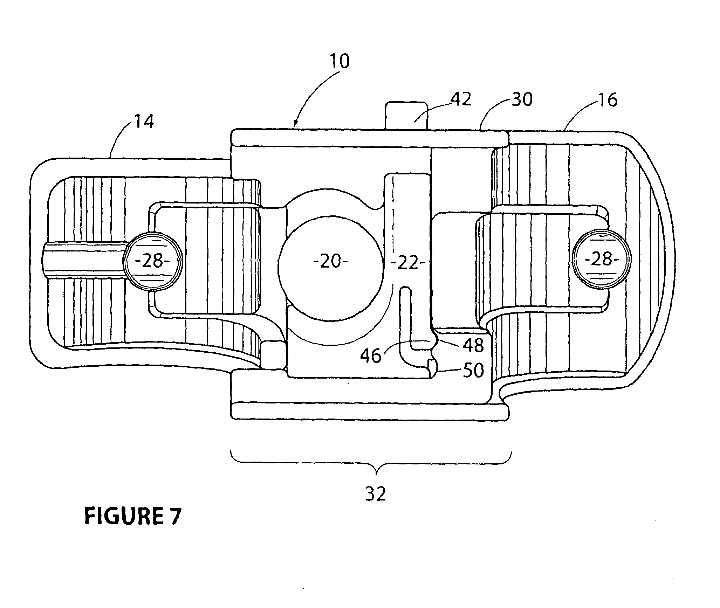

Figures 6 and 7 show bottom views of the adaptor 10, with the lock in disengaged and engaged conditions, respectively.

Where the mounting bracket 26 is in the form of a full-saddle having a mounting portion 58 at either end of a curved holding portion 38, after operating the tool so as to drive a first fastener through one mounting portion 58 of the mounting bracket 26, the adaptor 10 is then pivoted about substantially 180 degrees relative to the mounting bracket 26 so as to align the tool 12 for driving a second fastener through the other mounting portion 58 of the full-saddle type mounting bracket 26. The tool 12 is then operated to drive the second fastener through that other mounting portion 58 to further secure the mounting bracket 26 to the substrate 52.

Advantageously, by use of the adaptor as described above, the mounting bracket 26 is able to be secured efficiently to the substrate to hold a conduit to the substrate without manually holding the mounting bracket in position relative to the substrate during fastening, thus removing or at least reducing the danger of injury from a fastener being accidentally driven into a user's hand.

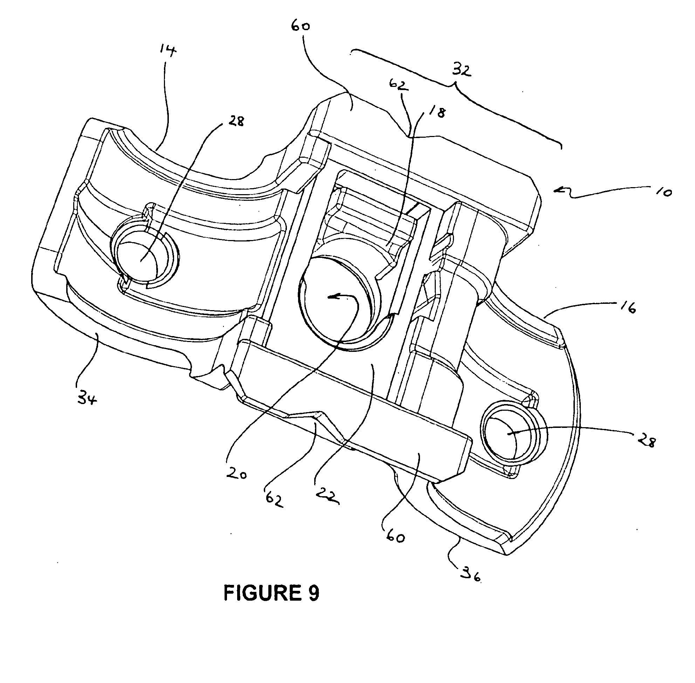

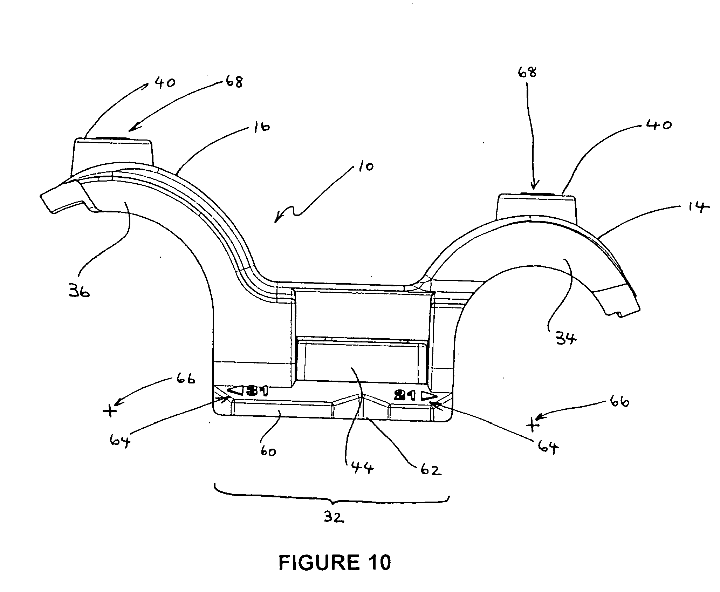

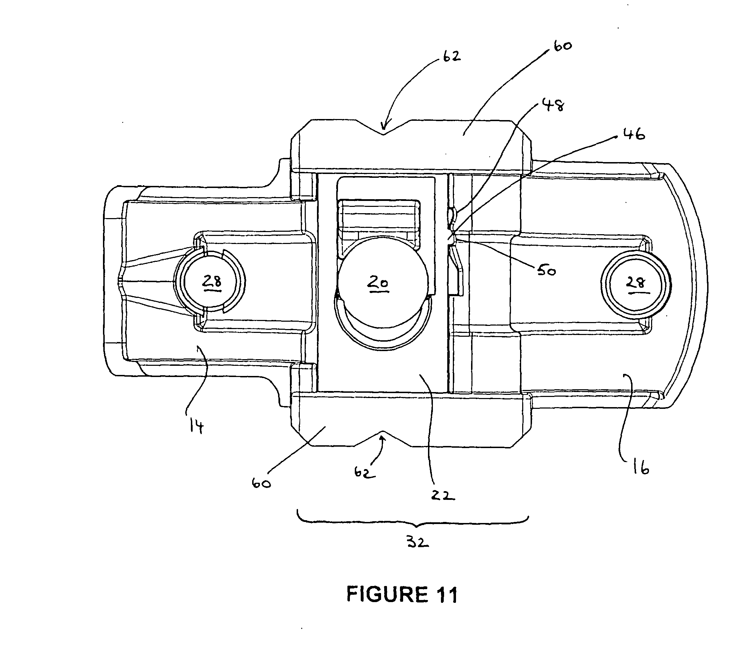

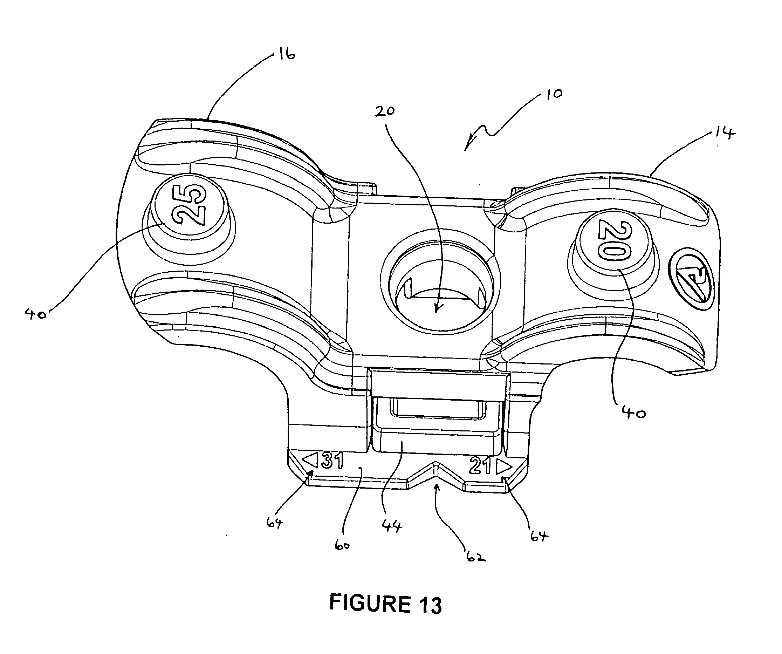

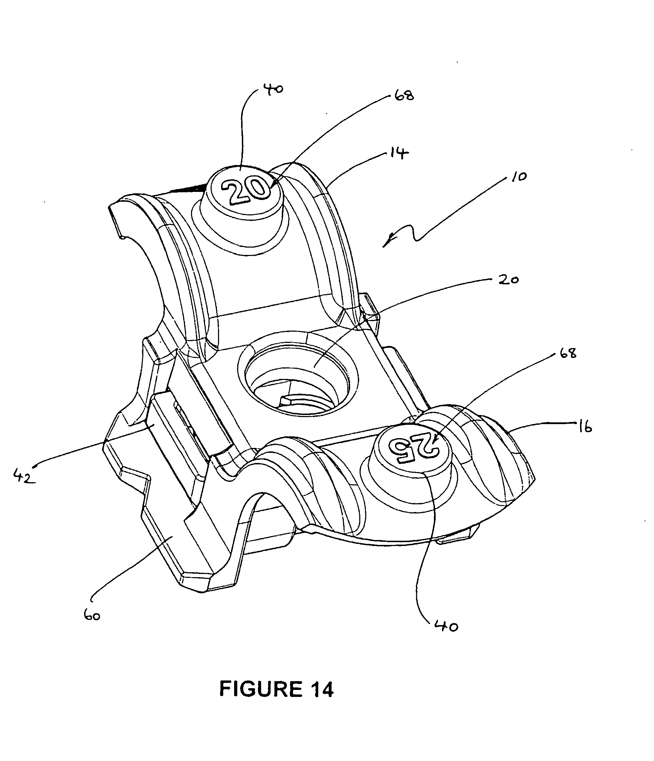

Figures 9 to 14 show an alternative adaptor 10a, which is similar in general configuration and operation to the adaptor 10 shown in Figures 1 to 8. Accordingly, features of the adaptor 10a of Figures 9 to 14 which are alike features of the adaptor 10 of Figures 1 to 8 are indicated with like reference numerals.

One difference of the adaptor 10a of Figures 9 to 14 when compared to the adaptor 10 of Figures 1 to 8 is that the body 32 has laterally-protruding feet 60 on either side which assist in achieving stable abutment of the adaptor 10a against a mounting bracket 26 before and during fastening of the mounting bracket to a substrate 52. The laterally-protruding feet are also provided with indicators in the form of indentations 62 which are aligned with a centre of the aperture 20 to assist a user in correctly aligning the adaptor 10a and mounting bracket 26 relative to the substrate 52 so as to ensure a correct fastened position of the mounting bracket on the substrate 52.

The feet 60 are also marked with dimensioned indicators 64 which give the relative distances of the centre of the aperture 20 to relevant reference positions 66. In the example shown, the reference positions 66 are the centres of the saddles of the mounting bracket, and the dimensioned indicators 64 are labelled "21" and "31" at either end of the body 32 to correspond with the distance in millimetres of the centre of the aperture 20 relative to the centre of the respective saddle.

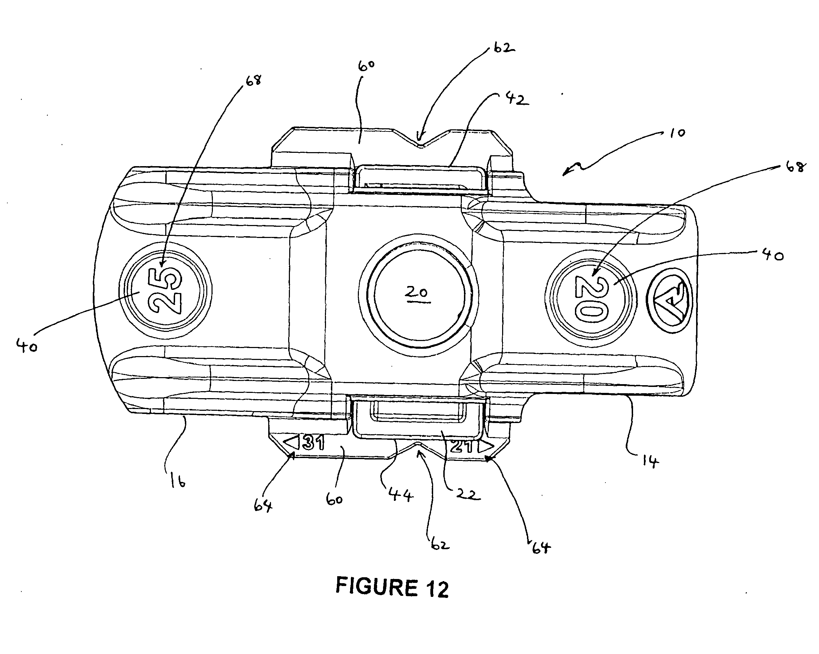

A further difference of the adaptor 10a of Figures 9 to 14 is that the bulges 40 on the top surfaces of the supports 14, 16 which house the magnetic members 28 are marked with dimensions 68 corresponding to the diameter of mounting bracket 26 for which the respective supports 14, 16 are sized. Accordingly, as can be seen with reference to Figure 12, one support 14 is sized for use with a 20mm diameter saddle type mounting bracket and the other support 16 is sized for use with a 25mm diameter saddle type mounting bracket. Other adaptors may be sized for use with other sizes of mounting bracket. In particular, the Applicant foresees a further adaptor having a first support sized for use with a 16mm diameter saddle type mounting bracket and a second support sized for use with a 32mm diameter saddle type mounting bracket.

The above adaptors have been described by way of example only and modifications are possible within the scope of the invention as defined by the claims.

## Claims

1. An adaptor (10) for a fastening tool (12), the adaptor having an attachment portion (18) for coupling the adaptor to the fastening tool, and a support (14;16) for coupling a mounting bracket (26) to the adaptor (10) arranged so as to hold the mounting bracket relative to a substrate (52) and allow a fastener (54) from the tool (12) to be driven through the mounting bracket (26) to secure the mounting bracket to the substrate (52), wherein the adaptor has a body (32) which includes the attachment portion (18);
**characterised in that** there are two said supports (14;16) which extend outwardly from opposite sides of the body (32), each of the supports being in the form of a curved arm (34,36) having a different radius of curvature to enable contact between one of the arms and associated differently shaped mounting brackets (26a;26b).

2. An adaptor as claimed in claim 1, wherein the attachment portion (18) is fitted to a nosepiece (24) of the tool.

3. An adaptor as claimed in claim 2, wherein the attachment portion (18) includes an aperture (20) which receives the nosepiece (24) of the tool.

4. An adaptor as claimed in claim 2 or claim 3, wherein the adaptor (10) is provided with a lock (22) for releasably locking the adaptor to the nosepiece (24) of the tool.

5. An adaptor as claimed in claim 4, wherein the lock (22) is selectively operable to engage with an annular groove formed in an outer surface of the nosepiece (24).

6. An adaptor as claimed in claim 4 or claim 5, wherein the lock (22) is included in the body (32).

7. An adaptor as claimed in any one of claims 1 to 6, wherein the adaptor (10) is arranged to align an aperture of the mounting bracket (26) with a nosepiece bore of the tool.

## Patentansprüche

1. Adapter (10) für ein Befestigungswerkzeug (12), wobei der Adapter einen Befestigungsabschnitt (18) zum Ankoppeln des Adapters an das Befestigungswerkzeug und eine Stütze (14; 16) zum Ankoppeln einer Montagehalterung (26) an den Adapter (10) hat, die so angeordnet ist, dass sie die Montagehalterung in Bezug auf ein Substrat (52) hält und es gestattet, dass eine Befestigungsvorrichtung (54) vom Werkzeug (12) durch die Montagehalterung (26) getrieben werden kann, um die Montagehalterung am Substrat (52) zu befestigen, wobei der Adapter einen Körper (32) hat, der den Befestigungsabschnitt (18) aufweist,
**dadurch gekennzeichnet, dass** von den Stützen (14; 16) zwei vorliegen, die sich von gegenüberliegenden Seiten des Körpers (32) nach außen erstrecken und jeweils in der Form eines gekrümmten Arms (34, 36) mit einem unterschiedlichen Krümmungsradius vorliegen, um Kontakt zwischen einem der Arme und zugeordneten unterschiedlich geformten Montagehalterungen (26a; 26b) zu ermöglichen.

2. Adapter nach Anspruch 1, wobei der Befestigungsabschnitt (18) an einem Nasenteil (24) des Werkzeugs angebracht ist.

3. Adapter nach Anspruch 2, wobei der Befestigungsabschnitt (18) eine Öffnung (20) aufweist, die den Nasenteil (24) des Werkzeugs aufnimmt.

4. Adapter nach Anspruch 2 oder 3, wobei der Adapter (10) mit einem Schloss (22) versehen ist, um den Adapter freigebbar an dem Nasenteil (24) des Werkzeugs zu verriegeln.

5. Adapter nach Anspruch 4, wobei das Schloss (22) gezielt betrieben werden kann, um mit einer in einer Außenfläche des Nasenteils (24) ausgebildeten ringförmigen Nut in Eingriff zu kommen.

6. Adapter nach Anspruch 4 oder 5, wobei das Schloss (22) im Körper (32) inbegriffen ist.

7. Adapter nach einem der Ansprüche 1 bis 6, wobei der Adapter (10) so angeordnet ist, dass er eine Öffnung der Montagehalterung (26) auf eine Nasenteilbohrung des Werkzeugs ausrichtet.

## Revendications

1. Adaptateur (10) pour outil de fixation (12), l'adaptateur comportant une partie de fixation (18) servant à accoupler l'adaptateur à l'outil de fixation, et un support (14;16) servant à accoupler un support de montage (26) à l'adaptateur (10) agencé de manière à maintenir le support de montage par rapport à un substrat (52) et à permettre qu'une attache de fixation (54) de l'outil (12) puisse être enfoncée à travers le support de montage (26) pour fixer le support de montage au substrat (52), ledit adaptateur comprenant un corps (32) qui incorpore la partie de fixation (18) ;
**caractérisé en ce que** deux desdits supports (14;16) s'étendent vers l'extérieur à partir de côtés opposés du corps (32), chacun des supports ayant la forme d'un bras incurvé (34,36) présentant un rayon de courbure différent pour permettre le contact entre un des bras et des supports de montage associés (26a;26b) ayant des formes différentes.

2. Adaptateur selon la revendication 1, dans ledit adaptateur la partie de fixation (18) est montée sur une pièce de nez (24) de l'outil.

3. Adaptateur selon la revendication 2, dans ledit adaptateur la partie de fixation (18) comprend une ouverture (20) qui accueille la pièce de nez (24) de l'outil.

4. Adaptateur selon la revendication 2 ou 3, ledit adaptateur (10) étant doté d'un verrou (22) pour verrouiller de manière amovible l'adaptateur à la pièce de nez (24) de l'outil.

5. Adaptateur selon la revendication 4, dans ledit adaptateur le verrou (22) peut être commandé sélectivement pour être engagé dans une gorge annulaire ménagée sur une surface extérieure de la pièce de nez (24).

6. Adaptateur selon la revendication 4 ou la revendication 5, dans ledit adaptateur le verrou (22) est incorporé dans le corps (32).

7. Adaptateur selon l'une quelconque des revendications 1 à 6, ledit adaptateur (10) étant agencé de manière à aligner une ouverture du support de montage (26) avec un alésage de la pièce de nez de l'outil.
